# EUROPÄISCHE PATENTSCHRIFT

(11) **EP 3 197 961 B1**
(45) Veröffentlichungstag und Bekanntmachung des Hinweises auf die Patenterteilung: **24.10.2018**
(21) Anmeldenummer: 15745476.0
(22) Anmeldetag: 31.07.2015
(51) Int. Cl.: C09D 5/44

(54) **WÄSSRIGE BINDEMITTELDISPERSIONEN FÜR KATHODISCHE ELEKTROTAUCHLACKE**
AQUEOUS BINDER DISPERSIONS FOR CATHODIC ELECTRODIP COATING
DISPERSIONS AQUEUSES DE LIANTS POUR LE TREMPAGE ELECTROPHORETIQUE CATHODIQUE

(30) Priorität: 26.09.2014 EP 14186625
(43) Veröffentlichungstag der Anmeldung: 02.08.2017
(73) Patentinhaber: BASF Coatings GmbH, 48165 Münster (DE)
(72) Erfinder: OTT, Günther, 48167 Münster (DE); OBERHOFF, Markus, 48317 Drensteinfurt (DE); PRZYBILLA, Silke, 48167 Münster (DE); GROSSE BRINKHAUS, Karl-Heinz, 48301 Nottuln (DE); STOLL, Dominik, 40225 Düsseldorf (DE)
(74) Vertreter: BASF IP Association
(86) Internationale Anmeldenummer: PCT/EP2015/067700
(87) Internationale Veröffentlichungsnummer: WO 2016/045842

(56) Entgegenhaltungen:
- WO-A1-02/081525
- WO-A1-03/037952

## Beschreibung

Die vorliegende Erfindung betrifft wässrige Bindemitteldispersionen für kathodische Elektrotauchlacke auf der Basis von modifizierten Epoxidharzen sowie die Verwendung entsprechender kathodischer Elektrotauchlacke zur Herstellung von Lackierungen und die Verwendung von Vernetzern auf Basis von mit 2,2-Dimethyl-1,3-dioxolan-4-methanol blockierten Polyisocyanaten in den wässrigen Bindemitteldispersionen.

Die kationische Elektrotauchlackierung ist ein vor allem zum Grundieren häufig angewandtes Lackierverfahren, bei dem wasserverdünnbare kationische Gruppen tragende Kunstharze mit Hilfe von Gleichstrom auf elektrisch leitende Körper aufgebracht werden. Die so auf dem Substrat erhaltenen Lackfilme werden anschließend in einem Ofen ausgehärtet. Zur Erreichung der gewünschten Qualität der resultierenden Lackierung ist es von großer Bedeutung, dass eine ausreichende Aushärtung der Lackierung erreicht wird. Vor allem bei großen Substraten, wie Automobilkarosserien, kann es jedoch vorkommen, dass es durch die Größe, Masse, Beschaffenheit und Geometrie des Substrates nicht zu einer gleichmäßigen Erwärmung des Substrates und damit des Lackfilmes kommt. Durch diese Ungleichmäßigkeit kann es an einigen Stellen, an denen nicht die gewünschte Einbrenntemperatur erreicht wird, zu einer unvollständigen Aushärtung kommen (Unterbrenngefahr). Diesem Effekt wird mit einer Erhöhung der Temperatur begegnet, was jedoch aufgrund des stark erhöhten Energieverbrauchs weder umweltfreundlich noch wirtschaftlich ist.

Als Bindemittel für kathodische Elektrotauchlacke ist die Verwendung von modifizierten Epoxidharzen bekannt, wie z.B. in US 4,260,147, US 4,260,720 und US 4,268,542 beschrieben. Die EP 0961797 beschreibt zum Beispiel wässrige Bindemitteldispersionen für kathodische Elektrotauchlacke auf Basis von modifizierten Epoxidharzen, die Aminogruppen enthalten. Dabei werden blockierte Polyisocyanate gerade bei wässrigen Bindemitteldispersionen für kathodische Elektrotauchlacke als schwierig erweist. Da im Falle von Polyisocyanaten als Vernetzer aufgrund der Lagerstabilität der wässrigen Bindemitteldispersionen blockierte Polyisocyanate eingesetzt werden.

Die DE 19857867 A1 beschreibt Reaktivpolyurethane und die daraus erhältlichen, gegenüber Isocyanaten reaktiven Polyurethane. Die Reaktivpolyurethane werden dabei durch Umsetzung eines Polyisocyanats mit einer hydroxyfunktionellen Verbindung erhalten, die einen gegenüber NCO-Gruppen inerten Reaktivrest enthält, der nach Freisetzung einer Schutzgruppe mindestens zwei gegenüber Isocyanaten reaktive Gruppen aufweist. Durch die entsprechende Freisetzung der Schutzgruppen werden Polyurethanpolyole erhalten, die dann wiederum zu Polyadditionsprodukten oder Polykondensationprodukten umgesetzt werden.

WO 03/037952 A1 offenbart ein härtbares Stoffgemisch enthaltend (A) bestimmte Bestandteile mit Carbamatgruppen, (B) bestimmte Bestandteile mit carbamatreaktiven Gruppen, wobei das Äquivalentverhältnis von carbamatreaktiven Gruppen in (B) zu Carbamatgruppen in (A) > 0,2 ist, sowie (C) bestimmte Addukte, die Isocyanatgruppen im Molekül enthalten.

WO 02/081525 A1 offenbart Polyol-Latex-Zusammensetzungen, Verfahren zur Herstellung solcher Zusammensetzung sowie Kondensationspolymere, die solche Zusammensetzungen enthalten.

Die Aufgabe der vorliegenden Erfindung besteht darin, neue Bindemitteldispersionen zu finden, die eine Verbesserung hinsichtlich der Unterbrenngefahr aufweisen. Die neuen Bindemitteldispersionen sollten bei niedrigen Temperaturen bereits möglichst vollständig aushärten (Niedrigtemperatur-Aushärtung; "Low bake"-Beschichtungsmittel) und gleichzeitig Lackierungen von hoher Qualität liefern. Des Weiteren sollten die Beschichtungsmittel gleichzeitig eine gute Lagerstabilität aufweisen. Außerdem sollten die aus den Bindemitteldispersionen erhaltenen Beschichtungen eine hervorragende Beständigkeit gegen Lösemittel aufweisen.

Diese Aufgabe wird gelöst durch eine wässrige Bindemitteldispersion für kathodisch abscheidbare Elektrotauchlacke enthaltend mindestens ein aminmodifiziertes hydroxyfunktionelles Epoxidharz als Bindemittel, wobei die Bindemitteldispersion als Vernetzer mindestens ein vollständig blockiertes Polyisocyanat enthält, welches zumindest teilweise mit 2,2-Dimethyl-1,3-dioxolan-4-methanol blockiert ist. Entsprechende Bindemitteldispersionen weisen eine hohe Reaktivität auf, so dass bereits relativ niedrige Temperaturen zu einer weitgehend vollständigen Aushärtung führen. Somit können insgesamt niedrigere Temperaturen zum Einbrennen der Elektrotauchlackfilme verwendet werden und es wird eine Verbesserung hinsichtlich der Unterbrenngefahr erreicht. Zudem führen entsprechende Bindemitteldispersionen zu

Somit können insgesamt niedrigere Temperaturen zum Einbrennen der Elektrotauchlackfilme verwendet werden und es wird eine Verbesserung hinsichtlich der Unterbrenngefahr erreicht. Zudem führen entsprechende Bindemitteldispersionen zu Lackierungen von hervorragender Qualität, vor allem auch hinsichtlich der Lösemittelbeständigkeit. Des Weiteren besteht der Vorteil, dass 2,2-Dimethyl-1,3-dioxolan-4-methanol leicht erhältlich ist und somit der Zugang zu den blockierten Polyisocyanat-Vernetzern verbessert wird.

Unter einer wässrigen Bindemitteldispersion versteht man eine Dispersion, die als Lösungsmittel hauptsächlich Wasser enthält und vorzugsweise im Wesentlichen frei von organischen Lösungsmitteln ist. Bevorzugt enthalten die wässrigen Dispersionen mehr als 50 Gew.-% Wasser, bezogen auf die gesamte Zusammensetzung. Besonders bevorzugt ist der Anteil an organischen Lösungsmitteln kleiner als 5 Gew.-%, vorzugsweise kleiner 2 Gew.-%, bezogen auf die gesamte Zusammensetzung.

Als Bindemittel ist in der wässrigen Bindemitteldispersion für kathodisch abscheidbare Elektrotauchlacke mindestens ein modifiziertes Epoxidharz enthalten. Prinzipiell sind alle bekannten modifizierten Epoxidharze geeignet. Bei den Epoxidharzen handelt es sich um die an sich bekannten Polykondensationsharze, die ein Grundgerüst aus Polyepoxidverbindungen mit Alkoholen aufweisen.

Geeignete Polyepoxidverbindungen sind aus Polyphenolen und Epihalohydrinen hergestellte Diglycidylether von Polyphenolen. Als Polyphenole können zum Beispiel die bevorzugten Polyphenole Bisphenol A und Bisphenol F eingesetzt werden. Ebenfalls geeignet sind 1,1-Bis(4-hydroxyphenyl)-n-heptan, 4,4'-Dihydroxybenzophenon, Bis(4-hydroxyphenyl)-1,1-ethan, Bis(4-hydroxy-tertiar-butylphenyl)-2,2-propan, Bis(2-hydroxynaphtyl)methan, 1,5-Dihydroxynaphtalin und phenolische Novolackharze. Ebenfalls geeignete Epoxidverbindungen sind auch Diglycidylether von mehrwertigen Alkoholen wie Ethylenglykol, Diethylenglykol, Triethylenglykol, 1,2-Propylenglykol, Glycerin und Bis-(4-hydroxycyclohexyl)-2,2-propan. Es können auch Diglycidylester von Polycarbonsäuren, wie zum Beispiel Oxalsäure, Bernsteinsäure, Glutarsäure, Terephthalsäure, 2,6-Naphtalindicarbonsäure, dimerisierter Linolensäure usw., eingesetzt werden. Typische Beispiele sind Glycidyladipat und Glycidylphthalat. Ferner sind Hydantoinepoxide, epoxidiertes Polybutadien und Diepoxidverbindungen geeignet, die man durch Epoxidierung einer olefinisch ungesättigten alicyclischen Verbindung erhält. Bevorzugt handelt es sich bei den hydroxyfunktionellen Epoxidharzen um durch Kondensation von Bisphenol A und/oder Bisphenol F mit Epichlorhydrin hergestellte Epoxidharze. Diese Verbindungen enthalten bevorzugt entlang der Kette Hydroxygruppen und an den Enden Epoxidgruppen.

Bevorzugt werden bei der Herstellung der hydroxyfunktionellen Epoxidharze aromatische oder aliphatische Verbindungen eingesetzt, die eine Hydroxyl-, eine Carboxyl-, eine Phenol- oder eine Thiolgruppe enthalten, oder ein Gemisch solcher Verbindungen sind, und unter den während der Herstellung der Epoxidharze herrschenden Reaktionsbedingungen gegenüber Epoxidgruppen monofunktionell reagieren. Bevorzugt werden zum Beispiel Dodecylphenol, Phenol oder Butoxypropanol zur Herstellung der hydroxyfunktionellen Epoxidharze verwendet. Bevorzugt enthält somit das hydroxyfunktionelle Epoxidharz Dodecylphenol, Phenol und/oder Butoxypropanol einpolymerisiert.

Die aminmodifizierten hydroxyfunktionellen Epoxidharze werden aus den hydroxyfunktionellen Epoxidharzen durch Umsetzung von nicht reagierten Epoxidgruppen mit Aminen erhalten. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z. B. Methylethanolamin, Diethanolamin und dergleichen. Ferner sind Dialkylaminoalkylamine bevorzugt wie z.B. Dimethylaminoethylamin, Diethylaminopropylamin, Dimethylaminopropylamin und dergleichen. In den meisten Fällen werden niedermolekulare Amine verwendet, doch ist es auch möglich, höhermolekulare Monoamine anzuwenden. Polyamine mit primären und sekundären Aminogruppen können in Form ihrer Ketimine mit den Epoxidgruppen umgesetzt werden, wie beispielsweise das Bis-methylisobutyl-diketimin von Diethylentriamin. Die Ketimine werden aus den Polyaminen in bekannter Weise hergestellt. Die Amine können auch noch andere Gruppen enthalten, doch sollen diese die Umsetzung des Amins mit der Epoxygruppe nicht stören und auch nicht zu einer Gelierung der Reaktionsmischung führen. Die modifizierten Epoxidharze können primäre, sekundäre als auch tertiäre Amingruppen aufweisen. Außerdem können die hydroxyfunktionellen Epoxidharze mit verschiedenen Aminen modifiziert werden.

Bevorzugt werden die hydroxyfunktionellen Epoxidharze mit mindestens einem Amin ausgewählt aus der Gruppe bestehend aus Mono- und Dialkylaminen, Alkanolaminen, Dialkylaminoalkylamine und Ketimine von Polyaminen mit primären und sekundären Aminogruppen umgesetzt. Ganz besonders bevorzugt wird das mindestens eine Amin ausgewählt aus der Gruppe bestehend aus Methylethanolamin, Diethanolamin, Dimethylaminoethylamin, Diethylaminopropylamin, Dimethylaminopropylamin und Bis-methylisobutyl-diketimin. Besonders bevorzugt wird das hydroxyfunktionellen Epoxidharze mit Diethanolamin umgesetzt.

Die Herstellung der aminmodifizierten hydroxyfunktionellen Epoxidharze kann durch Zusatz von Katalysatoren erfogen, vorzugsweise von tertiären Aminen, quaternären Ammoniumsalzen, Phosphin oder Phosphinderivaten bzw. Phosphinsalzen. Das verwendete Phosphin kann ein beliebiges Phosphin sein, welche keine störenden Gruppen enthält. Beispiele solcher Phosphine sind aliphatische, aromatische oder alicyclische Phosphine, wobei als spezifische Beispiele folgende Phosphine genannt seien: Niedrige Trialkylphosphine, wie Trimethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin, alicyclische Phosphine, wie Tetramethylenethylphosphin und dergleichen. Besonders bevorzugt wird als Katalysator Triphenylphosphin oder N,N-Dimethylbenzylamin eingesetzt.

Die für die Wasserverdünnbarkeit und elektrische Abscheidung erforderlichen Ladungen können durch Protonierung mit wasserlöslichen Säuren (z. B. Ameisensäure, Milchsäure und Essigsäure) oder auch durch Umsetzung der Oxirangruppen mit Salzen eines Amins oder einer Sulfid/Säure- oder Phosphin/Säure-Mischung erzeugt werden. Als Salz eines Amins kann vorzugsweise das Salz eines tertiären Amins verwendet werden. Der Aminanteil des Amin-Säure-Adduktes ist ein Amin, das unsubstituiert oder substituiert, wie im Falle des Hydroxylamins, sein kann, wobei diese Substituenten die Umsetzung des Amin-Säure-Adduktes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Die Amin-Säure-Mischung wird durch Umsetzung des Amins mit der Säure in bekannter Weise erhalten.

Der Neutralisationsgrad (gemessen als das Verhältnis von MEQ-Säure zu MEQ-Base) beträgt vorzugsweise von 30% bis 50%, bevorzugt von 35% bis 45%.

Als Vernetzungsmittel wird mindestens ein vollständig blockiertes Polyisocyanat eingesetzt, welches zumindest teilweise mittels 2,2-Dimethyl-1,3-dioxolan-4-methanol blockiert ist. Hierbei bedeutet "vollständig blockiert", dass das Polyisocyanat keine freien Isocyanat-Gruppen mehr besitzt und somit 100 mol% der im Polyisocyanat ursprünglich vorhandenen Isocyanatgruppen blockiert sind. Unter einer "zumindest teilweisen Blockierung" mit 2,2-Dimethyl-1,3-dioxolan-4-methanol ist zu verstehen, dass mindestens ein Teil der ursprünglich im Polyisocyanat vorhandenen Isocyanatgruppen mit 2,2-Dimethyl-1,3-dioxolan-4-methanol blockiert sind, während der gegebenenfalls vorhandene Rest der ursprünglich im Polyisocyanat vorhandenen Isocyanatgruppen mit einem oder mehreren von 2,2-Dimethyl-1,3-dioxolan-4-methanol verschiedenen Blockierungsmitteln blockiert sind.

Vorzugsweise sind 50 bis 100 mol% der ursprünglich im Polyisocyanat vorhandenen Isocyanatgruppen mit 2,2-Dimethyl-1,3-dioxolan-4-methanol und 0 bis 50 mol% der ursprünglich im Polyisocyanat vorhandenen Isocyanatgruppen mit einem oder mehreren von 2,2-Dimethyl-1,3-dioxolan-4-methanol verschiedenen Blockierungsmitteln blockiert.

Besonders bevorzugt sind 75 bis 100 mol% der ursprünglich im Polyisocyanat vorhandenen Isocyanatgruppen mit 2,2-Dimethyl-1,3-dioxolan-4-methanol und 0 bis 25 mol% der ursprünglich im Polyisocyanat vorhandenen Isocyanatgruppen mit einem oder mehreren von 2,2-Dimethyl-1,3-dioxolan-4-methanol verschiedenen Blockierungsmittel blockiert.

Ganz besonders bevorzugt sind 90 bis 100 mol% der ursprünglich im Polyisocyanat vorhandenen Isocyanatgruppen mit 2,2-Dimethyl-1,3-dioxolan-4-methanol und 0 bis 10 mol% der ursprünglich im Polyisocyanat vorhandenen Isocyanatgruppen mit einem oder mehreren von 2,2-Dimethyl-1,3-dioxolan-4-methanol verschiedenen Blockierungsmittel blockiert.

In einer ganz besonders bevorzugten Ausführungsform ist das vollständig blockierte Polyisocyanat vollständig mit 2,2-Dimethyl-1,3-dioxolan-4-methanol blockiert. Das heißt, dass in einem solchen Fall sämtliche der ursprünglich am Polyisocyanat vorhandenen Isocyanatgruppen mit 2,2-Dimethyl-1,3-dioxolan-4-methanol blockiert sind.

Das zwingend einzusetzende Blockierungsmittel 2,2-Dimethyl-1,3-dioxolan-4-methanol ist auch bekannt unter der Bezeichnug 2,3-O-Isopropyliden-glycerin und ist beispielsweise unter dem Namen Solketal ® von der Firma Glaconchemie GmbH erhältlich.

Beispiele geeigneter, von 2,2-Dimethyl-1,3-dioxolan-4-methanol verschiedener Blockierungsmittel zur Herstellung der vollständig blockierten Polyisocyanate sind:
(i) Phenole, wie Phenol, Cresol, Xylenol, Nitrophenol, Ethylphenol, t-Butylphenol, Hydroxybenzoesäure, Ester dieser Säure oder 2,5-Di-tert.-butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) von 2,2-Dimethyl-1,3-dioxolan-4-methanol verschiedene Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Ethylenglykolmono-n-hexylether, Diethylenglykolmonomethylether, Diethylenglykolmonoethylether, Diethylenglykolmonobutylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleinimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim oder Benzophenonoxim;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvii) 1,2-Polyole wie Ethylenglykol, Propylenglykol oder 1,2-Butandiol;
xviii) 2-Hydroxyester wie 2-Hydroxyethylacrylat oder 2-Hydroxyethylmethacrlyat;
xix) Gemische der vorgenannten Blockierungsmittel.

Als Polyisocyanate können für die Herstellung der erfindungsgemäß vollständig blockierten Polyisocyanate alle bekannten Polyisocyanate eingesetzt werden, sowohl aliphatische als auch aromatische oder Mischungen aromatische und aliphatischer Polyisocyanate. Dabei können sowohl monomere Polyisocyanate, sowie Dimere oder Trimere von den Polyisocyanaten als auch oligomere oder polymere Polyisocyanate eingesetzt werden. Bevorzugt sind Isocyanate, deren monomerer Bestandteil etwa 3 bis etwa 36, insbesondere etwa 8 bis etwa 15 Kohlenstoffatome enthält. Beispiele geeigneter solcher monomeren Polyisocyanate sind Diisocyanate wie Trimethylendiisocyanat, Tetramethylendiisocyanat, Pentamethylendiisocyanat, Hexamethylendiisocyanat, Propylendiisocyanat, Ethylethylendiisocyanat, Methyltrimethylendiisocyanat, Trimethylhexamethylendiisocyanat, Xylylendiisocyanat, 1,3-Cyclopentylendiisocyanat, 1,4-Cyclohexylendiisocyanat, 1,2-Cyclohexylendiisocyanat, 4,4'-Diphenylmethandiisocyanat, 1,5-Naphthylendiisocyanat, Toluol-2,4-diisocyanat, Isophorondiisocyanat und 4,4'-Diisocyanatodicyclohexylmethan. Es können auch Polyisocyanate von höherer Isocyanatfunktionalität verwendet werden, wie Tris(4-Isocyanatophenyl)methan, 2,4,4'-Triisocyanatodiphenylmethan oder Bis(2,5-Diisocyanato-4-methylphenyl)methan. Diese Polyisocyanate können auch als Di- oder Trimer eingesetzt werden, bzw. als Bausteine für oligomere oder polymere Polyisocyanate dienen. Ferner kann man auch Mischungen von Polyisocyanaten benutzen. Bevorzugt werden oligomere oder polymere Polyisocyanate, besonders bevorzugt oligomere Polyisocyanate mit einer NCO-Funktionalität von vorzugsweise 2,4 bis 4.

Vorzugsweise werden aromatische Polyisocyanate eingesetzt, besonders bevorzugt Oligomere von aromatischen Polyisocyanaten mit einer NCO-Funktionalität von vorzugsweise 2,4 bis 4. Besonders bevorzugt ist ein oligomeres 4,4'-Diphenylmethandiisocyanat (MDI), welches beispielsweise als Lupranat M20S von der Firma BASF erhältlich ist.

Gerade die erfindungsgemäß blockierten aromatischen Polyisocyanate weisen eine hohe Reaktivität auf und beugen so der der Unterbrennung vor, vor allem das blockierte oligomere 4,4'-Diphenylmethandiisocyanat.

Die als Vernetzungsmittel eingesetzten, erfindungsgemäß blockierten Polyisocyanate werden in der Regel in einer Menge von 10 bis 50 Gew.-%, bevorzugt 25 bis 40 Gew.-%, bezogen auf den Bindemittelanteil in den wässrigen Bindemitteldispersionen, eingesetzt. Das bedeutet, dass der Anteil der erfindungsgemäß vollständig blockierten Polyisocyanate 10 bis 50 Gew.-% bzw. 25 bis 40 Gew.-% vom gesamten Bindemittelanteil der wässrigen Bindemitteldispersion beträgt.

Die wässrigen Bindemitteldispersionen können durch Vermischen des Bindemittels und des Vernetzers in Wasser hergestellt werden. Vorzugsweise erfolgt die Modifizierung der hydroxyfunktionellen Epoxidharze mit Aminen in Gegenwart des mindestens einen mit 2,2-Dimethyl-1,3-dioxolan-4-methanol blockierten Polyisocyanat-Vernetzers.

Bevorzugt weisen die wässrigen Bindemitteldispersionen Bindemittelteilchen einer mittleren Teilchengröße von 50 bis 200 nm auf, besonders bevorzugt von 60 bis 160 nm.

Bevorzugt haben die wässrigen Bindemitteldispersionen einen Festkörperanteil von 20 bis 50 %, besonders bevorzugt von 32 bis 42 %.

Die Elektrotauchlacke können selbstverständlich weitere Elektrotauchlackspezifische Bestandteile enthalten wie sie aus dem einschlägigen Stand der Technik bekannt sind. Vorzugsweise enthalten die Elektrotauchlacke neben den erfindungsgemäßen Bindemitteldispersionen Pigmente und/oder Füllstoffe. Als Pigmente und Füllstoffe können prinzipiell alle anorganischen und organischen Pigmente und Füllstoffe eingesetzt werden.

Typische anorganische Pigmente sind Oxid- und Oxidhydroxid-Pigmente, wie beispielsweise Titandioxid, Zinkoxid, Eisenoxid und Chromoxid, Oxid-Mischphasenpigmente, wie beispielsweise Bismut-Molybdän-Vanadium-Oxidgelb, Chromtitangelb, Spinellblau, Eisen-Manganbraun, Zink-Eisenbraun, Eisen-Manganschwarz und Spinellschwarz, Sulfid- und Sulfidselenidpigmente, wie beispielsweise Zinksulfid, Lithopone, Cadmiumgelb und Cadmiumrot, Carbonatpigmente, wie Calciumcarbonat (mit der obengenannten anwendungstechnischen Einschränkung), Chromat- und Chromat-Molybdän-Mischphasenpigmente, wie beispielsweise Chromgelb und Molybdatorange und -rot, Komplexsalzpigmente, wie beispielsweise Eisenblau, Silikatpimente, wie beispielsweise Aluminiumsilikat und Ultramarin (blau, violett und rot), Pigmente aus chemischen Elementen, wie beispielsweise Aluminium, Kupfer-Zink-Legierungen und Pigmentruß, sowie andere Pigmente, wie beispielweise Bariumsulfat. Typische Vertreter schwerlöslicher Bismutverbindungen sind beispielsweise Bismutsubnitrat und Bismutsubsalicylat, die beispielsweise auch katalytisch als Vernetzungskatalysatoren wirken können.

Typische organische Pigmente sind Monoazopigmente, Disazopigmente und polycyclische Pigmente wie beispielsweise Perylenpigmente und Phthalocyaninpigmente.

Typische anorganische Füllstoffe sind Silicate, wie beispielsweise Talk und Kaolin, Kieselsäuren, wie beispielsweise gefällte oder pyrogene Kieselsäuren, Oxide, wie beispielsweise Aluminiumhydroxid oder Magnesiumhydroxid, Sulfate, wie beispielsweise Blanc fixe und Calciumsulfate, sowie verschiedene Carbonate.

Für die vorliegende Erfindung ist eine scharfe Unterscheidung zwischen Pigmenten und Füllstoffen nicht notwendig. In der Praxis wird zur Unterscheidung häufig der Brechungsindex herangezogen. Liegt dieser oberhalb von 1,7 so spricht man in der Regel von Pigmenten, liegt er unterhalb dieses Werts von Füllstoffen. Die erfindungsgemäßen wässrigen Zubereitungen sind bevorzugt pigmentierte Beschichtungsmittelzusammensetzungen, ganz besonders bevorzugt kathodisch abscheidbare Elektrotauchlacke.

Der erfindungsgemäßen Bindemitteldispersion kann vor, während und/oder nach ihrer Herstellung noch mindestens ein übliches Lackadditiv zugesetzt werden. Der Fachmann kann solche Lackadditive anhand seines allgemeinen Fachwissens identifizieren. Vorzugsweise werden die genannten Lackadditive nach der Herstellung der Dispersion zugesetzt.

Beispiele geeigneter Additive sind thermisch härtbare Reaktivverdünner, niedrig siedende und/oder hochsiedende organische Lösemittel, UV-Absorber, Lichtschutzmittel, Radikalfänger, thermolabile radikalische Initiatoren, Katalysatoren für die Vernetzung, beispielsweise zinnhaltige Katalysatoren, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive oder Flammschutzmittel. Weitere Beispiele geeigneter Lackadditive werden in dem Lehrbuch Lackadditive von Johan Bieleman, Wiley-VCH, Weinheim, New York, 1998, beschrieben.

Der Einsatz der erfindungsgemäßen Bindemitteldispersionen in kationischen Elektrotauchlacken führt zur Abscheidung von Schichten, die hervorragende Eigenschaften aufweisen und auch gut überlackiert werden können.

Ein weiterer Gegenstand der vorliegenden Erfindung ist die Verwendung der erfindungsgemässen wässrigen Bindemitteldispersionen in kathodischen Elekrotauchlacken sowie ein Verfahren zur kathodischen Elektrotauchlackierung unter Verwendung der erfindungsgemässen wässrigen Bindemitteldispersionen. Die resultierenden erfindungsgemässen kathodischen Elektrotauchlacke können zur Beschichtung elektrisch leitfähiger Substrate mittels kathodischer Elektrotauchlackierung verwendet werden. Bevorzugt wird der erfindungsgemässe kathodische Elektrotauchlack zur Beschichtung metallischer Substrate verwendet. Als metallische Substrate sind beispielsweise Substrate aus Stahl, Aluminium, Kupfer, Legierungen verschiedener Metalle oder dergleichen geeignet. Vorzugsweise werden Substrate aus Stahl verwendet. Besonders bevorzugt werden Substrate aus phosphatierten metallischen Substraten verwendet, insbesondere Substrate aus phosphatiertem Stahl. Unter phosphatierten metallischen Substraten werden metallische Substrate verstanden, die durch entsprechende chemische Vorbehandlung mit phosphathaltigen anorganischen Konversionsschichten versehen wurden. Besonders bevorzugte Substrate sind Kraftfahrzeugkarosserien oder Teile davon.

Unter kathodischer Elektrotauchlackierung wird ein Verfahren zur Beschichtung elektrisch leitfähiger Substrate verstanden, bei dem
1) das Substrat in einen wässrigen Elektrotauchlack, der mindestens ein kathodisch abscheidbares Bindemittel enthält, eingetaucht wird,
2) das Substrat als Kathode geschaltet wird,
3) durch Gleichstrom ein Film auf dem Substrat abgeschieden wird,
4) das Substrat aus dem Elektrotauchlack entfernt wird, und
5) der abgeschiedene Lackfilm eingebrannt wird.

Insbesondere wird die kathodische Elektrotauchlackierung zum Grundieren von Werkstücken angewendet.

Die Temperatur des Elektrotauchbades soll üblicherweise zwischen 15 bis 40 °C, bevorzugt zwischen 25 und 35 °C liegen. Die angelegte Spannung kann in einem grossen Bereich schwanken und kann z. B. zwischen 50 und 500 Volt liegen. Typischerweise wird aber mit Spannungen zwischen 250 und 400 Volt gearbeitet. Nach der Abscheidung wird der beschichtete Gegenstand abgespült und ist zum Einbrennen bereit. Die abgeschiedenen Lackfilme werden im allgemeinen bei Temperaturen von 130 bis 220 °C über eine Zeitdauer von 8 bis 60 Minuten, vorzugsweise bei 150 bis 180 °C über eine Zeitdauer von 12 bis 30 Minuten, eingebrannt. Dabei liegt der Vorteil der erfindungsgemäßen Lackfime aus den erfindungsgemäßen Elektrotauchlacken, die die erfindungsgemäßen Bindemitteldispersionen enthalten, darin, dass diese Lackfilme bereits bei geringeren Temperaturen vollständig vernetzen und so ein geringeres Unterbrennrisiko besteht.

Ein weiterer Gegenstand der vorliegenden Erfindung ist somit auch ein mit dem erfindungsgemässen Elektrotauchlack enthaltend die erfindungsgemäße Bindemitteldispersionen beschichtetes Substrat, insbesondere ein metallisches Substrat, wie bespielsweise ein Substrat aus Stahl, Aluminium, Kupfer, Legierungen verschiedener Metalle oder dergleichen, bevorzugt ein Substrat aus phosphatiertem Metall, insbesondere aus phosphatiertem Stahl. Ganz besonders bevorzugt sind so beschichtete Kraftfahrzeugkarosserien oder Teile davon.

Außerdem sind Gegenstand der Erfindung Mehrschichtlackierungen, die eine kathodische Elektrotauchlackierung basierend auf der erfindungsgemässen Bindemitteldispersionen enthalten. Vorzugsweise handelt es dich bei den Elektrotauchlackierungen und den entsprechenden Mehrschichtlackierungen um Automobillackierungen.

Weiter Gegenstand der Erfindung ist die Verwendung der vollständig blockierten Polyisocyanate, die mindestens teilweise mit 2,2-Dimethyl-1,3-dioxolan-4-methanol blockiert sind, als Vernetzer in wässrigen Bindemitteldispersionen enthaltend mindestens ein aminmodifiziertes hydroxyfunktionelles Epoxidharz als Bindemittel. Dabei ist die Verwendung der oben genannten Polyisocyanate und der oben genannten aminmodifizierten hydroxyfunktionellen Epoxidharze bevorzugt.

### Beispiele:

### Bestimmungsmethoden:

### Bestimmung der Glasübergangstemperatur Tg:

Die Glasübergangstemperatur Tg wird mit Hilfe der Dynamischen Differenzkalorimetrie (DDK) (englisch: Differential Scanning Calorimetry, DSC) entsprechend der DIN 53765 (03.1994; Prüfung von Kunststoffen und Elastomeren - Thermische Analyse - Dynamische Differenzkalorimetrie (DDK)) bei einer Aufheizrate von 10 K/min bestimmt.

### Bestimmung des NCO-Gehaltes:

Der NCO-Gehalt wird durch Umsetzung der NCO-Gruppen (Isocyanate) mit einem Dibutylaminüberschuß zu Harnstoffderivaten und anschließender Rücktitration des überschüssigen Amins mit HCl quantitativ bestimmt. Der NCO-Gehalt gibt den Gehalt an Isocyanat in Gew.-% an und kann umgerechnet werden in das NCO-Equivalentgewicht, welches angibt, in wie viel Gramm Substanz ein Mol NCO-Gruppen enthalten sind.

### Bestimmung des Festkörpergehaltes:

Ca. 2 g Probe werden in eine vorher getrocknete Aluminiumschale eingewogen und 1 Stunde bei 130°C im Trockenschrank getrocknet, im Exsikkator abgekühlt, und dann zurückgewogen. Der Rückstand (= nicht flüchtiger Anteil) entspricht dem Festkörperanteil bzw. Festkörpergehalt bzw. Feststoffgehalt. Falls der Festkörpergehalt davon abweichend bestimmt wurde, werden Zeit und Temperatur entsprechend angegeben, beispielsweise in Klammern.

### Bestimmung des Bindemittelanteils:

Unter Bindemittelanteil ist jeweils der in Tetrahydrofuran (THF) lösliche Anteil des Beschichtungsmittels vor der Vernetzung zu verstehen. Dazu wird eine kleine Probe in der 50 bis 100-fachen Menge THF gelöst, unlösliche Bestandteile werden abfiltriert und daran anschließend der Feststoffgehalt in Übereinstimmung mit der obigen Beschreibung bestimmt.

### Bestimmung der OH-Zahl und der Säurezahl bzw. des Säuregehaltes:

Die Säurezahl (SZ) wird nach DIN 53402 und die OH-Zahl (Hydroxylzahl) nach DIN 53240 bestimmt. Die Säurezahl kann in den Säuregehalt umgerechnet werden.

### MEQ-Säure und MEQ-Base

Der MEQ-Wert (milli-equivalent) gibt die Anzahl von Milli-Äquivalenten an Säuren oder Basen an, die in 100 g des nichtflüchtigen Anteils (Festkörper) eines Beschichtungsstoffs oder Bindemittels enthalten sind. Für die Bestimmung wird die eingewogene Probe (2 bis 5 g bezogen auf Bindemittel) mit einem geeigneten Lösemittel, beispielsweise Methoxypropanol oder Butylglykol versetzt und für den MEQ-Säure-Wert mit Kaliumhydroxidlösung und den MEQ-Base-Wert mit Salzsäure titriert. Details sind DIN EN ISO 15880 entnehmbar.

### Epoxid-Equivalentgewicht:

Die Bestimmung des Epoxid-Equivalentgewichtes dient zur Ermittlung des Gehaltes an epoxidisch gebundenem Sauerstoff in epoxyfunktionellen Polymeren.Unter dem Epoxid-Equivalentgewicht versteht man diejenige Menge Epoxidharz in g, die 16 g epoxidisch gebundenen Sauerstoff, d.h. 1 mol Epoxygruppen, enthält. Das Harz wird in einer Mischung aus Dichlormethan und Essigsäure gelöst. Die Lösung wird mit N-Cetyl-N,N,N-trimethylammoniumbromid versetzt und unter Verwendung von Kristallvoilett als Indikator mit Perchlorsäure in Eisessig titriert. Durch die Reaktion des Bromidsalzes mit Perchlorsäure entsteht Bromwasserstoff (HBr), der unter Öffnung des Oxiranringes an das Molekül addiert wird. Je mol Epoxyfunktion wird 1 mol Perchlorsäure benötigt. Ist die Reaktion vollständig abgelaufen, wird schließlich der Indikator durch überschüssige Protonen protoniert und es kommt zum Farbumschlag über blau nach grün. Details lassen sich DIN EN ISO 7142 und DIN 16945 entnehmen.

### Bestimmung der mittleren Teilchengröße:

Die mittlere Teilchengröße der Bindemittelteilchen der Bindemitteldispersionen wird mit dem Photonenkorrelationsspektrometer Zetasizer Nano S90 der Firma Malvern, England gemessen. Ausgewertet wird das "Volume-Mean".

### Vernetzer 1:

### Herstellung eines Vernetzers für eine Elektrotauchlackzusammensetzung

In einem Reaktor, der mit einem Rührer, Rückflusskühler, Innenthermometer und Inertgaseinleitung ausgestattet ist, werden 1053,5 g 2,3-O-Isopropyliden-glycerin (2,2-Dimethyl-1,3-dioxolan-4-methanol, Solketal ® ; Fa. Glaconchemie GmbH, D-06217 Merseburg) unter Stickstoffatmosphäre vorgelegt. Man gibt 1,4 g Dibutylzinndilaurat zu, heizt auf 50°C auf und tropft 878,4 g Isomere und höherfunktionelle Oligomere auf Basis von 4,4'-Diphenylmethandiisocyanat mit einem NCO-Equivalentgewicht von 135 g/eq (Lupranat M20S, Fa. BASF; NCO-Funktionalität ca. 2,7; Gehalt an 2,2'- und 2,4'-Diphenylmethandiisocyanat unter 5%) mit einer solchen Geschwindigkeit zu, dass die Produkttemperatur unter 70°C bleibt. Gegen Ende der Zugabe lässt man die Temperatur auf 100°C steigen und hält anschließend noch 90 Minuten bei dieser Temperatur. Bei der nachfolgenden Kontrolle sind keine NCO-Gruppen mehr nachweisbar. Man startet zu kühlen und verdünnt durch Zugabe von 175,0 g Pluriol C 1651 (Dibutoxyethoxyformal, Hersteller BASF SE) und 66,7 g Ethanol, und kühlt auf 65°C ab. Der Feststoffgehalt liegt bei 80%.

### Bindemitteldispersion 1:

**Herstellung einer lösungsmittelarmen wässrigen Bindemitteldispersion, die ein kathodisch abscheidbares Kunstharz mit primären Aminogruppen und Hydroxylgruppen und den Vernetzer 1 enthält.**

In einem wärmeträgerölbeheizten Laborreaktor, ausgestattet mit Rührer, Rückflusskühler, Thermometer und Inertgaseinleitungsrohr, werden 961,2 Teile eines handelsüblichen Epoxidharzes auf Basis von Bisphenol A mit einem Epoxidäquivalentgewicht (EEW) von 186 g/eq, 63,9 Teile Phenol, 52,4 Teile Dodecylphenol, 218,9 Teile Bisphenol A und 68,4 Teile Xylol vorgelegt und unter Rühren und unter Einleitung von Stickstoff auf 130°C aufgeheizt. Bei Erreichen von 125°C werden 2,6 Teile N,N-Dimethylbenzylamin zugegeben. Es tritt eine exotherme Reaktion ein, wobei die Temperatur auf 146°C steigt. Nach Absinken der Temperatur auf 137°C werden weitere 1,2 Teile N,N-Dimethylbenzylamin zugegeben. Man lässt die Temperatur weiter absinken und hält sie bei 130°C, bis das Epoxidequivalentgewicht (EEW) 870 g/eq erreicht hat (ca. 3 Stunden).

Dann werden unter Kühlung 967,1 Teile des Vernetzers aus Beispiel 1, sowie 31,8 Teile Butylglykol und 198,6 Teile Isobutanol zugegeben. Nachdem die Temperatur auf 96°C gefallen ist, werden 71,3 Teile einer 70%-igen Lösung des Bis-methylisobutyl-diketimins von Diethylentriamin in Methylisobutylketon (MIBK) sowie 79,2 Teile N-Methylethanolamin zugegeben. 30 Minuten später, wenn die Temperatur auf 100°C gestiegen ist, werden 19,3 Teile N,N-Dimethylaminopropylamin zugegeben. 20 Minuten später wird auf 80°C gekühlt und währenddessen mit 152,4 Teilen Loxanol PL 5060 (BASF SE) und 100 Teilen Phenoxypropanol verdünnt und ausgetragen.

Anschließend werden 2105,4 Teile der Harzmischung in einem separaten Dispergiergefäß in eine Mischung aus 1118,9 Teilen vollentsalztem Wasser und 69,2 Teilen 88%-iger Milchsäure unter Rühren eingetragen. Nachdem die Mischung homogen geworden ist, wird mit weiteren 1903,2 Teilen vollentsalztem Wasser langsam verdünnt.

Man erhält eine wässrige kationische Dispersion, die anschließend durch azeotrope Vakuumdestillation bei 40°C von ihren leichtflüchtigen Lösemitteln befreit wird, wobei das organische Destillat durch vollentsalztes Wasser ersetzt wird. Nach Filtration über Plattenfilter K 900 (Fa. Seitz) erhält man eine Dispersion mit folgenden Kennzahlen:

| | |
|---|---|
| Festkörpergehalt: | 32,4% |
| Basengehalt: | 0,687 meq/g Festharz^{*)} |
| Säuregehalt: | 0,328 meq/g Festharz^{*)} |
| Mittlere Teilchengröße: | 98 nm^{**)} |
| Absetzstabilität: | nach 2 Monaten Lagerzeit bei Raumtemperatur kein Bodensatz |

| | |
|---|---|
| ^{*)} Milliäquivalente/Gramm Festharz ^{**)} gemessen mit Photonenkorrelationsspektrometer Zetasizer Nano S90 der Fa. Malvern | |

### Vernetzer 2:

### Herstellung eines Vergleichsvernetzers

Verwendet wird der Vernetzer aus EP 0961797 B1 (S. 6 Z. 43 - 52). In einem Reaktor, der mit einem Rührer, Rückflußkühler, Innenthermometer und Inertgaseinleitung ausgestattet ist, werden 1084 g Isomere und höherfunktionelle Oligomere auf Basis von 4,4'-Diphenylmethandiisocyanat mit einem NCO-Equivalentgewicht von 135 g/eq (Lupranat M20S, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gibt 2 g Dibutylzinnlaurat zu und tropft 1314 g Butyldiglycol mit einer solchen Geschwindigkeit zu, dass die Produkttemperatur unter 70°C bleibt. Gegebenenfalls muss gekühlt werden. Nach Ende der Zugabe wird die Temperatur weitere 120 Minuten bei 70°C gehalten. Bei der nachfolgenden Kontrolle sind keine NCO-Gruppen mehr nachweisbar. Man kühlt auf 65°C ab.
Der Feststoffgehalt liegt bei > 97 %.

### Bindemitteldispersion 2 (Vergleich):

**Herstellung der lösungsmittelarmen wässrigen Bindemitteldispersion, die ein kathodisch abscheidbares Kunstharz und den Vernetzer 2 als Vergleich enthält.**

Es wird gemäß dem Beispiel der Bindemitteldispersion 1 verfahren. Anstelle des Vernetzers 1 werden nunmehr 797,6 Teile des Vernetzers 2 (entspricht gemäß dem Feststoffgehalt der Menge des Vernetzers 1 im Beispiel der Bindemitteldispersion 1) eingesetzt.

Nach Entfernen der leichtflüchtigen Lösemittel durch azeotrope Vakuumdestillation bei 40°C wird mit vollentsalztem Wasser auf einen Ziel-Feststoffgehalt von 32% verdünnt.

Nach Filtration über Plattenfilter K 900 (Fa. Seitz) erhält man eine Dispersion mit folgenden Kennzahlen:

| | |
|---|---|
| Festkörpergehalt: | 32,2% |
| Basengehalt: | 0,684 meq/g Festharz ^{*)} |
| Säuregehalt: | 0,323 meq/g Festharz ^{*)} |
| Mittlere Teilchengröße: | 110 nm^{**)} |
| Absetzstabilität: | nach 2 Monaten Lagerzeit bei Raumtemperatur kein Bodensatz |

| | |
|---|---|
| ^{*)} Milliäquivalente/ Gramm Festharz ^{**)} gemessen mit Photonenkorrelationsspektrometer Zetasizer Nano S90 der Fa. Malvern | |

### Herstellung eines Reibharzes A

Verwendet wird das Reibharz A aus EP 0961797 (S. 9, Z. 17 - 21). In einem mit Rührwerk, Innenthermometer, Stickstoffeinlass und Wasserabscheider mit Rückflusskühler ausgestatteten Reaktor werden 30,29 Teile eines Epoxidharzes auf Basis Bisphenol A mit einem Epoxidequivalentgewicht (EEW) von 188 g/eq, 9,18 Teile Bisphenol A, 7,04 Teile Dodecylphenol und 2,37 Teile Butylglykol vorgelegt. Man heizt auf 110°C auf, fügt 1,85 Teile Xylol zu und destilliert dieses unter schwachem Vakuum zusammen mit möglichen Wasserspuren wieder ab. Sodann gibt man 0,07 Teile Triphenylphosphin zu und heizt auf 130°C auf. Nach exothermer Wärmetönung auf 150°C lässt man bei 130°C noch 1 Stunde nachreagieren. Das EEW der Reaktionsmischung liegt dann bei 860 g/eq. Man kühlt und gibt währenddessen 9,91 Teile Butylglykol und 17,88 Teile eines Polypropylenglykoldiglycidylethers mit EEW 333 g/eq (DER 732, Dow Chemicals) zu. Bei 90°C werden 4,23 Teile 2,2'-Aminoethoxyethanol (H₂N-CH₂-CH₂-O-CH₂-CH₂-OH) und 10 Minuten später 1,37 Teile N,N-Dimethylaminopropylamin zugefügt. Die Reaktionsmischung wird nach kurzzeitiger Exothermie noch für 2 Stunden bei 90°C gehalten, bis die Viskosität konstant bleibt, und anschließend wird mit 17,66 Teilen Butylglykol verdünnt. Das Harz hat einen Festkörpergehalt von 69,8% und eine Viskosität von 5,5 dPas (gemessen an einer 40%-igen mit Propylenglykolmonomethylether (Solvenon PM, BASF) verdünnten Harzlösung am Platte-Kegel-Viskosimeter bei 23°C). Das Harz wird der besseren Handhabung wegen zusätzlich mit 2,82 Teilen Eisessig und 13,84 Teilen vollensalztem Wasser neutralisiert und verdünnt. Der ursprüngliche Festkörpergehalt wird dadurch auf 60% abgesenkt.

### Herstellung wässriger Pigmentpasten

Analog zu dem in EP 0505445 B1 (S. 10, Z. 35 - 42) beschriebenen Verfahren werden aus den in der nachfolgenden Tabelle 1 aufgeführten Ausgangsstoffen wässrige Pigmentpasten hergestellt. Dazu werden zunächst entionisiertes Wasser und das Reibharz A vorgemischt. Dann fügt man die übrigen

Bestandteile gemäß den Mengenangaben in Tabelle 1 hinzu und mischt 30 Minuten lang unter einem schnellaufenden Dissolverrührwerk. Anschließend wird die Mischung in einer Laborkleinmühle während 1 bis 1,5 Stunden bis zu einer Hegmann-Feinheit von kleiner 12 dispergiert. Die Mengenangaben verstehen sich als Gewichtsanteile.

**Tabelle 1: Pigmentpasten**

| | Pigmentpaste A | Pigmentpaste B |
|---|---|---|
| Reibharz A | 40 | 40 |
| vollentsalztes Wasser | 10,5 | 9,4 |
| DBTO feucht (85%-ig) | 3,6 | |
| Wismutsubnitrat | | 6 |
| Russ | 0,5 | 0,5 |
| Aluminiumsilikat | 8 | 8 |
| Titandioxid* | 35,2 | 33,1 |
| Deuteron MK-F6** | 2,2 | 3 |

| | | |
|---|---|---|
| * TI-PURE R900, DuPont ** Polyharnstoff, Fa. Deuteron | | |

### Elektrotauchlack A und B:

### Beispiel und Vergleichsbeispiel für einen erfindungsgemäßen und einen herkömmlichen kathodischen Elektrotauchlack

Zur Herstellung eines herkömmlichen und des erfindungsgemäßen kathodischen Elektrotauchlacks werden die Bindemitteldispersion 1 und 2 und die wässrige Pigmentpaste A mit vollentsalztem Wasser in den in Tabelle 2 angegebenen Mengen (Gewichtsanteile) kombiniert. Man verfährt dabei so, dass die Bindemitteldispersion vorgelegt und mit vollentsalztem Wasser verdünnt wird. Anschließend wird unter Rühren die Pigmentpaste eingetragen. Es resultieren der erfindungsgemäße Elektrotauchlack A sowie der herkömmliche Elektrotauchlack B.

**Tabelle 2: Erfindungsgemäßer und herkömmlicher Elektrotauchlack**

| **Ansatzrezeptur** | Erfindungsgemäßes Elektrotauchlackbad A | Herkömmliches Elektrotauchlackbad B |
|---|---|---|
| Bindemitteldispersion 1 | 2356,6 | |
| Bindemitteldispersion 2 | | 2371,2 |
| vollensalztes Wasser | 1865,1 | 1850,5 |
| Pigmentpaste A | 578,3 | 578,3 |
| Summe: | 4800,0 | 4800,0 |

Man lässt die Elektrotauchlackbäder 3 Tage bei Raumtemperatur unter Rühren altern. Die Abscheidung der Lackfilme erfolgt während 2 Minuten bei 220 - 270 Volt Abscheide- und 350 Volt Abrißspannung (Badtemperatur 32°C) auf kathodisch geschalteten zinkphosphatierten Stahlprüftafeln ohne Cr(VI)-Nachspülung in der Vorbehandlung.

**Tabelle 3: Badcharakteristik (pH-Werte, Leitwerte, Festkörper) der erfindungsgemäßen KT-Lacke**

| | KT-Lack A | KT-Lack B (Vergleich) |
|---|---|---|
| pH-Wert | 6,1 | 6,0 |
| Leitwert (mS/cm) | 1,37 | 1,39 |
| Festkörpergehalt (30 Minuten bei 180°C) | 20,9 | 21,6 |

Die abgeschiedenen Filme werden mit entionisiertem Wasser nachgespült und während 15 Minuten bei 175°C (Objekttemperatur) eingebrannt (außerdem bei 160°C für die Bestimmung der Glasübergangstemperatur Tg als Maß für die Vernetzung).

**Tabelle 4: Filmeigenschaften und Glasübergangstemperaturen Tg der resultierenden KT-Lackierungen A und B**

| | KT-Lackierung A | KT-Lackierung B (Vergleich) |
|---|---|---|
| Schichtdicke (µm) | 20,1 | 20,8 |
| Verlauf | sehr gut | sehr gut |
| Glasübergangstemperatur Tg (160°C) | **79** | **72** |
| Glasübergangstemperatur Tg (175°C) | **82** | **81** |

Die Glasübergangstemperatur der Vergleichslackierung B zeigt bei 160°C-Einbrennung mit Tg = 72°C eine noch nicht vollständige Vernetzung im Vergleich zur 175°C-Einbrennung mit Tg = 81°C. Die erfindungsgemäße KT-Lackierung A hingegen liegt mit Tg = 79°C bei 160°C-Einbrennung nahezu am Endzustand (Tg = 82°C bei 175°C-Einbrennung). Die Vernetzungsdichte hat sich bei der Lackierung A bereits bei 160°C weiter entwickelt als beim Vergleich zur Lackierung B und weist damit eine verbesserte Unterbrennsicherheit im Vergleich zum Stand der Technik auf.

### Bindemitteldispersion 3

**Herstellung einer lösungsmittelarmen wässrigen Bindemitteldispersion, die ein kathodisch abscheidbares Kunstharz mit Hydroxylgruppen, aber ohne primäre Aminogruppen, sowie den Vernetzer 1 enthält.**

Gemäß EP 0 961 797 B1 wird eine Bindemitteldispersion hergestellt:
In einem wärmeträgerölbeheizten Laborreaktor, ausgestattet mit Rührer, Rückflusskühler, Thermometer und Inertgaseinleitungsrohr, werden 1211,5 Teile eines handelsüblichen Epoxidharzes auf Basis Bisphenol A mit einem Epoxidäquivalentgewicht (EEW) von 186 g/eq, 95,7 Teile Phenol, 47,5 Teile n-Butoxypropanol und 278,5 Teile Bisphenol A vorgelegt und unter Stickstoff auf 127°C aufgeheizt. Unter Rühren werden 1,6 Teile Triphenylphosphin zugegeben, worauf eine exotherme Reaktion eintritt und die Temperatur auf 170°C steigt. Man lässt wieder auf 130°C abkühlen und kontrolliert anschließend den Epoxidgehalt. Das EEW von 521 g/eq zeigt an, dass alle phenolischen OH-Gruppen reagiert haben. Sodann werden 158,9 Teile Pluriol P 900 (Polypropylenglykol MW 900, BASF) unter gleichzeitiger Kühlung zugegeben. 5 Minuten später gibt man bei 120°C unter weiterer Kühlung 117,7 Teile Diethanolamin zu. Sobald nach kurzzeitiger Exothermie (Tmax 127°C) die Temperatur auf 100°C gesunken ist (30 Minuten), gibt man 57,2 Teile N,N-Dimethylaminopropylamin zu. Nach kurzzeitiger Exothermie (Tmax 145°C) lässt man den Ansatz für 2 Stunden bei 130°C weiterreagieren, bis die Viskosität konstant bleibt (1280 mPas, Brookfield-Viskosimeter CAP 2000+, bei 23°C, Kegel CAP 03, 5000 1/s, 51%-ig in Solvenon PM (BASF)). Sodann gibt man unter gleichzeitiger Kühlung 1031,5 Teile des Vernetzers 1 zu und trägt bei 105°C aus.

2194,1 Teile der noch heißen Mischung werden unverzüglich in einer vorgelegten Mischung aus 1401,9 Teilen vollentsalztem Wasser und 31,0 Teilen 85%-iger Ameisensäure unter intensivem Rühren dispergiert. Nach kurzem Homogenisieren wird mit weiteren 1247,1 Teilen vollentsalztem Wasser verdünnt und über Plattenfilter K900 (Fa. Seitz) filtriert. Eine destillative Entfernung von Lösemitteln entfällt, da die Dispersion bereits lösemittelarm anfällt. Die Dispersion besitzt folgende Kennzahlen:

| | |
|---|---|
| Festkörpergehalt: | 40,5% |
| Basengehalt : | 0,758 meq/g Festharz*⁾ |
| Säuregehalt: | 0,308 meq/g Festharz*⁾ |
| Mittlere Teilchengröße: | 114 nm^{**)} |
| Absetzstabilität: | nach 2 Monaten Lagerzeit bei Raumtemperatur kein Bodensatz |

| | |
|---|---|
| ^{*)} Milliäquivalente/ Gramm Festharz ^{**)} gemessen mit Photonenkorrelationsspektrometer Zetasizer Nano S90 der Fa. Malvern | |

### Bindemitteldispersion 4 (Vergleich):

**Herstellung einer lösungsmittelarmen wässrigen Bindemitteldispersion, die ein kathodisch abscheidbares Kunstharz mit Hydroxylgruppen, aber ohne primäre Aminogruppen, sowie den Vernetzer 2 enthält.**

Es wird gemäß dem Beispiel der Bindemitteldispersion 3 verfahren. Anstelle der 1031,5 Teile des Vernetzers 1 werden jedoch nunmehr 1031,5 Teile einer Vorverdünnung aus 916,9 Teilen des Vergleichsvernetzers 2 und 83,0 Teilen Pluriol C 1651 und 31,6 Teilen Ethanol zugegeben (entspricht gemäß dem Feststoffgehalt der Menge des Vernetzers 1 im Beispiel der Bindemitteldispersion 3. Man trägt dann bei 105°C aus und geht analog zu Beispiel 8 vor:
2194,1 Teile der noch heißen Mischung werden in einer vorgelegten Mischung aus 1401,9 Teilen vollentsalztem Wasser und 31,0 Teilen 85%-iger Ameisensäure unter intensivem Rühren dispergiert. Nach kurzem Homogenisieren wird mit weiteren 1247,1 Teilen vollentsalztem Wasser verdünnt und über Plattenfilter K900 (Fa. Seitz) filtriert. Eine destillative Entfernung von Lösemitteln entfällt, da die Dispersion bereits lösemittelarm anfällt. Die Dispersion besitzt folgende Kennzahlen:

| | |
|---|---|
| Festkörpergehalt: | 40,2% |
| Basengehalt: | 0,761 meq/g Festharz^{*)} |
| Säuregehalt: | 0,309 meq/g Festharz^{*)} |
| Mittlere Teilchengröße: | 120 nm^{**)} |
| Absetzstabilität: | nach 2 Monaten Lagerzeit bei Raumtemperatur kein Bodensatz |

| | |
|---|---|
| ^{*)} Milliäquivalente/ Gramm Festharz ^{**)} gemessen mit Photonenkorrelationsspektrometer Zetasizer Nano S90 der Fa. Malvern | |

### Elektrotauchlacke C und D

### Zubereitung von den Elektrotauchlackbädern C und D und die Abscheidung von Lackfilmen

Es werden Elektrotauchlackbäder entsprechend der zur Herstellung der Elektrotauchlacke A und B beschriebenen Vorgehensweise und gemäß den in Tabelle 5 aufgelisteten Einwaagen hergestellt.

**Tab. 5: Elektrotauchlacke C und D**

| Komponenten und Anteile: | Bad C (erfindungsgemäß) | Bad D (Vergleich) |
|---|---|---|
| Bindemitteldispersion 3 | 2112,0 | |
| Bindemitteldispersion 4 | | 2112,0 |
| vollentsalztes Wasser | 2401,2 | 2401,2 |
| Pigmentpaste B | 286,8 | 286,8 |
| Summe | 4800 | 4800 |

Gemäß den für die Elektrotauchlacke A und B genannten Abscheidebedingungen werden auf kathodisch geschalteten zinkphosphatierten Stahlprüftafeln ohne Cr(VI)-Nachspülung in der Vorbehandlung Filme erzeugt. Diese werden nach Abspülen gemäß den in Tabelle 6 genannten Einbrennbedingungen (20 Minuten bei 160°C, bzw. 175°C) ausgehärtet, so dass Filme mit 20 µm Schichtdicke entstehen.

**Tab.6: Filmeigenschaften und Glasübergangstemperaturen Tg der resultierenden KT-Lackierungen C und D**

| | KT-Lackierung C | KT-Lackierung D (Vergleich) |
|---|---|---|
| Schichtdicke (µm) | 21,2 | 20,4 |
| Verlauf | sehr gut | sehr gut |
| Glasübergangstemperatur Tg (160°C) | **78** | **67** |
| Glasübergangstemperatur Tg (175°C) | **81** | **80** |

Die Glasübergangstemperatur der Vergleichslackierung D zeigt bei 160°C-Einbrennung mit Tg = 67°C eine noch nicht vollständige Vernetzung im Vergleich zur 175°C-Einbrennung mit Tg = 80°C. Die erfindungsgemäße KT-Lackierung C hingegen liegt mit Tg = 78°C bei 160°C-Einbrennung näher am Endzustand (Tg = 81 °C bei 175°C-Einbrennung). Die Vernetzungsdichte hat sich bei der Lackierung C bereits bei 160°C weiter entwickelt als beim Vergleich zur Lackierung D und weist damit eine verbesserte Unterbrennsicherheit im Vergleich zum Stand der Technik auf.

## Patentansprüche

1. Wässrige Bindemitteldispersion für kathodische Elektrotauchlacke enthaltend mindestens ein aminmodifiziertes hydroxyfunktionelles Epoxidharz als Bindemittel, **dadurch gekennzeichnet, dass** die Bindemitteldispersion als Vernetzer mindestens ein vollständig blockiertes Polyisocyanat enthält, welches zumindest teilweise mit 2,2-Dimethyl-1,3-dioxolan-4-methanol blockiert ist.

2. Wässrige Bindemitteldispersion gemäß Anspruch 1, **dadurch gekennzeichnet, dass** im vollständig blockierten Polyisocyanat 50 bis 100 mol-% der blockierten Isocyanatgruppen mit mit 2,2-Dimethyl-1,3-dioxolan-4-methanol blockiert sind.

3. Wässrige Bindemitteldispersion gemäß Anspruch 2, **dadurch gekennzeichnet, dass** im vollständig blockierten Polyisocyanat 90 bis 100 mol-% der blockierten Isocyanatgruppen mit mit 2,2-Dimethyl-1,3-dioxolan-4-methanol blockiert sind.

4. Wässrige Bindemitteldispersion gemäß Anspruch 3, **dadurch gekennzeichnet, dass** im vollständig blockierten Polyisocyanat 100 mol-% der blockierten Isocyanatgruppen mit mit 2,2-Dimethyl-1,3-dioxolan-4-methanol blockiert sind.

5. Wässrige Bindemitteldispersion gemäß einem oder mehreren der Ansprüche 1 bis 4, **dadurch gekennzeichnet, dass** als Polyisocyanat ein aromatisches Polyisocyanat verwendet wird.

6. Wässrige Bindemitteldispersion gemäß einem oder mehreren der Ansprüche 1 bis 5, **dadurch gekennzeichnet, dass** als Polyisocyanat ein oligomeres Polyisocyanat verwendet wird.

7. Wässrige Bindemitteldispersion gemäß einem oder mehreren der Ansprüche 1 bis 6, **dadurch gekennzeichnet, dass** das Polyisocyanat eine NCO-Funktionalität von 2,4 bis 4 aufweist.

8. Wässrige Bindemitteldispersion gemäß einem oder mehreren der Ansprüche 1 bis 7, **dadurch gekennzeichnet, dass** als Vernetzer ein Polyisocyanat auf der Basis von 4,4'-Diphenylmethandiisocyanat verwendet wird.

9. Wässrige Bindemitteldispersion gemäß einem oder mehreren der Ansprüche 1 bis 8, **dadurch gekennzeichnet, dass** als Polyisocyanat ein oligomeres 4,4'-Diphenylmethandiisocyanat mit einer NCO-Funktionalität von 2,4 bis 4 verwendet wird.

10. Wässrige Bindemitteldispersion gemäß einem oder mehreren der Ansprüche 1 bis 9, **dadurch gekennzeichnet, dass** das blockierte Polyisocyanat in einer Menge von 5 bis 50 Gew.-% bezogen auf das Bindemittel eingesetzt wird.

11. Wässrige Bindemitteldispersion gemäß einem oder mehreren der Ansprüche 1 bis 10, **dadurch gekennzeichnet, dass** das Epoxidharz in Gegenwart des Vernetzer hergestellt wird.

12. Verfahren zur kathodischen Elektrotauchlackierung elektrisch leitfähiger Substrate, bei welchem
1) das elektrisch leitfähige Substrat in einen wässrigen Elektrotauchlack, der mindestens ein kathodisch abscheidbares Bindemittel enthält, eingetaucht wird,
2) das elektrisch leitfähige Substrat als Kathode geschaltet wird,
3) durch Gleichstrom ein Film auf dem elektrisch leitfähigen Substrat abgeschieden wird,
4) das beschichtete Substrat aus dem Elektrotauchlack entfernt wird, und
5) der abgeschiedene Lackfilm eingebrannt wird, **dadurch gekennzeichnet, dass** der wässrige Elektrotauchlack eine wässrige Bindemitteldispersion gemäß einem der Ansprüche 1 bis 11 enthält oder aus einer solchen besteht.

13. Verfahren gemäß Anspruch 12, wobei es sich beim elektrisch leitfähigen Substrat um eine Automobilkarosserie oder ein Teil davon handelt.

14. Verwendung vollständig blockierter Polyisocyanate, die zumindest teilweise mit 2,2-Dimethyl-1,3-dioxolan-4-methanol blockiert sind in wässrigen Bindemitteldispersionen für kathodische Elektrotauchlacke enthaltend ein aminmodifiziertes hydroxyfunktionelles Epoxidharz als Bindemittel.

15. Elektrotauchlackierung hergestellt unter Verwendung einer wässrigen Bindemitteldispersion gemäß den Ansprüchen 1 bis 11 oder erhalten gemäß Anspruch 12 oder 13.

16. Mehrschichtlackierung enthaltend eine Elektrotauchlackierung gemäß Anspruch 15.

17. Mehrschichtlackierung gemäß Anspruch 16, **dadurch gekennzeichnet, dass** diese auf einer Automobilkarosserie aufgebracht ist.

18. Elektrotauchlack, **dadurch gekennzeichnet, dass** dieser eine wässrige Bindemitteldispersion gemäß einem der Ansprüchen 1 bis 11 oder erhalten gemäß Anspruch 12 oder 13 enthält.

## Claims

1. Aqueous binder dispersion for cathodic electrocoat materials, comprising as binder at least one amine-modified, hydroxy-functional epoxy resin, **characterized in that** the binder dispersion comprises as crosslinker at least one fully blocked polyisocyanate blocked at least partly with 2,2-dimethyl-1,3-dioxolane-4-methanol.

2. Aqueous binder dispersion according to Claim 1, **characterized in that** 50 to 100 mol% of the blocked isocyanate groups in the fully blocked polyisocyanate are blocked with with 2,2-dimethyl-1,3-dioxolane-4-methanol.

3. Aqueous binder dispersion according to Claim 2, **characterized in that** 90 to 100 mol% of the blocked isocyanate groups in the fully blocked polyisocyanate are blocked with with 2,2-dimethyl-1,3-dioxolane-4-methanol.

4. Aqueous binder dispersion according to Claim 3, **characterized in that** 100 mol% of the blocked isocyanate groups in the fully blocked polyisocyanate are blocked with with 2,2-dimethyl-1,3-dioxolane-4-methanol.

5. Aqueous binder dispersion according to one or more of Claims 1 to 4, **characterized in that** as polyisocyanate an aromatic polyisocyanate is used.

6. Aqueous binder dispersion according to one or more of Claims 1 to 5, **characterized in that** as polyisocyanate an oligomeric polyisocyanate is used.

7. Aqueous binder dispersion according to one or more of Claims 1 to 6, **characterized in that** the polyisocyanate has an NCO functionality of 2.4 to 4.

8. Aqueous binder dispersion according to one or more of Claims 1 to 7, **characterized in that** as crosslinker a polyisocyanate based on 4,4'-diphenylmethane diisocyanate is used.

9. Aqueous binder dispersion according to one or more of Claims 1 to 8, **characterized in that** as polyisocyanate an oligomeric 4,4'-diphenylmethane diisocyanate having an NCO functionality of 2.4 to 4 is used.

10. Aqueous binder dispersion according to one or more of Claims 1 to 9, **characterized in that** the blocked polyisocyanate is used in an amount of 5 to 50 wt%, based on the binder.

11. Aqueous binder dispersion according to one or more of Claims 1 to 10, **characterized in that** the epoxy resin is prepared in the presence of the crosslinker.

12. Process for cathodic electrocoating of electrically conductive substrates, in which
1) the electrically conductive substrate is immersed into an aqueous electrocoat material which comprises at least one cathodically depositable binder,
2) the electrically conductive substrate is connected as cathode,
3) a film is deposited on the electrically conductive substrate by means of direct current,
4) the coated substrate is removed from the electrocoat material, and
5) the deposited coating film is baked, **characterized in that** the aqueous electrocoat material comprises or consists of an aqueous binder dispersion according to any of Claims 1 to 11.

13. Process according to Claim 12, the electrically conductive substrate being an automobile body or a part thereof.

14. Use of fully blocked polyisocyanates blocked at least partly with 2,2-dimethyl-1,3-dioxolane-4-methanol in aqueous binder dispersions for cathodic electrocoat materials comprising as binder an amine-modified, hydroxy-functional epoxy resin.

15. Electrocoat system produced using an aqueous binder dispersion according to Claims 1 to 11 or obtained according to Claim 12 or 13.

16. Multicoat paint system comprising an electrocoat system according to Claim 15.

17. Multicoat paint system according to Claim 16, **characterized in that** it is applied on an automobile body.

18. Electrocoat material **characterized in that** it comprises an aqueous binder dispersion according to any of Claims 1 to 11 or obtained according to Claim 12 or 13.

## Revendications

1. Dispersion de liant aqueuse pour laques par trempage électrophorétiques déposées par voie cathodique contenant, en tant que liant, au moins une résine époxy hydroxyfonctionnelle modifiée par un groupement aminé, **caractérisée en ce que** la dispersion de liant contient, en tant qu'agent réticulant, au moins un polyisocyanate entièrement bloqué qui est au moins en partie bloqué avec du 2,2-diméthyl-1,3-dioxolan-4-méthanol.

2. Dispersion de liant aqueuse selon la revendication 1, **caractérisée en ce que** dans le polyisocyanate entièrement bloqué, 50 à 100 % en moles des groupements isocyanates bloqués sont bloqués avec avec du 2,2-diméthyl-1,3-dioxolan-4-méthanol.

3. Dispersion de liant aqueuse selon la revendication 2, **caractérisée en ce que** dans le polyisocyanate entièrement bloqué, 90 à 100 % en moles des groupements isocyanates bloqués sont bloqués avec avec du 2,2-diméthyl-1,3-dioxolan-4-méthanol.

4. Dispersion de liant aqueuse selon la revendication 3, **caractérisée en ce que** dans le polyisocyanate entièrement bloqué, 100 % en moles des groupements isocyanates bloqués sont bloqués avec avec du 2,2-diméthyl-1,3-dioxolan-4-méthanol.

5. Dispersion de liant aqueuse selon l'une quelconque ou plusieurs des revendications 1 à 4, **caractérisée en ce que** l'on utilise en tant que polyisocyanate un polyisocyanate aromatique.

6. Dispersion de liant aqueuse selon l'une quelconque ou plusieurs des revendications 1 à 5, **caractérisée en ce que** l'on utilise en tant que polyisocyanate un polyisocyanate oligomère.

7. Dispersion de liant aqueuse selon l'une quelconque ou plusieurs des revendications 1 à 6, **caractérisée en ce que** le polyisocyanate présente une fonctionnalité NCO de 2,4 à 4.

8. Dispersion de liant aqueuse selon l'une quelconque ou plusieurs des revendications 1 à 7, **caractérisée en ce que** l'on utilise en tant qu'agent réticulant un polyisocyanate à base de 4,4'-diphénylméthanediisocyanate.

9. Dispersion de liant aqueuse selon l'une quelconque ou plusieurs des revendications 1 à 8, **caractérisée en ce que** l'on utilise en tant que polyisocyanate un 4,4'-diphénylméthanediisocyanate oligomère ayant une fonctionnalité NCO de 2,4 à 4.

10. Dispersion de liant aqueuse selon l'une quelconque ou plusieurs des revendications 1 à 9, **caractérisée en ce que** le polyisocyanate bloqué est utilisé dans une quantité de 5 à 50 % en poids par rapport au liant.

11. Dispersion de liant aqueuse selon l'une quelconque ou plusieurs des revendications 1 à 10, **caractérisée en ce que** la résine époxy est préparée en présence de l'agent réticulant.

12. Procédé pour le laquage par trempage électrophorétique cathodique de substrats électriquement conducteurs, dans lequel
1) le substrat électriquement conducteur est trempé dans une laque électrophorétique aqueuse qui contient au moins un liant déposable par voie cathodique,
2) le substrat électriquement conducteur est mis en circuit en tant que cathode,
3) un film est déposé par un courant continu sur le substrat électriquement conducteur,
4) le substrat revêtu est retiré de la laque électrophorétique, et
5) le film de laque déposé est cuit,
**caractérisé en ce que** la laque électrophorétique aqueuse contient une dispersion de liant aqueuse selon l'une quelconque des revendications 1 à 11 ou se compose d'une telle dispersion de liant aqueuse.

13. Procédé selon la revendication 12, dans lequel le substrat électriquement conducteur est une carrosserie automobile ou une pièce de carrosserie automobile.

14. Utilisation de polyisocyanates entièrement bloqués qui sont bloqués au moins en partie avec du 2,2-diméthyl-1,3-dioxolan-4-méthanol, dans des dispersions de liant aqueuses pour laques électrophorétiques déposées par voie cathodique contenant, en tant que liant, une résine époxy hydroxyfonctionnelle modifiée par un groupement aminé.

15. Laquage par trempage électrophorétique produit en utilisant une dispersion de liant aqueuse selon les revendications 1 à 11 ou obtenu selon la revendication 12 ou 13.

16. Laquage multicouche contenant un laquage par trempage électrophorétique selon la revendication 15.

17. Laquage multicouche selon la revendication 16, **caractérisé en ce qu'**il est appliqué sur une carrosserie automobile.

18. Laque électrophorétique, **caractérisée en ce qu'**elle contient une dispersion de liant aqueuse selon l'une quelconque des revendications 1 à 11 ou obtenue selon la revendication 12 ou 13.
